# EUROPEAN PATENT APPLICATION

(11) **EP 4 704 406 A1**
(43) Date of publication of application: **04.03.2026**
(21) Application number: 24196398.2
(22) Date of filing: 26.08.2024
(51) Int. Cl.: H04L 61/5038, H04L 41/12, H04L 12/40, H04L 67/12

(54) **ENHANCED ACCURACY OF IO-BUS TOPOLOGY DISCOVERY**

(71) Applicant: Siemens Schweiz AG, 8047 Zürich (CH)
(72) Inventor: Camenzind, Eric, 8002 Zürich (CH); Kyburz, Beat, 8913 Ottenbach (CH)
(74) Representative: Siemens Patent Attorneys

(57) **Abstract**

Customization of Building Automation Systems shall be made more comfortable. Thus, there is provided a method of automatically addressing a plurality of I/O-Modules (1) being connected to a controller (3) serially by a serial bus (2), the method includes the steps of:
- automatically measuring (S2) a respective distance from the controller (3) to each of the I/O-Modules (1) via the serial bus (2),
- wherein the automatically measuring (S2) is performed with a pregiven distance resolution (dm),
- wherein a conductor length within each I/O-Module (1) between respective two external ports of the serial bus (2) is longer than the shortest distance between the two external ports and longer than the pregiven distance resolution (dm), and
- automatically addressing (S3) all I/O-Modules (1) in dependence of the respective measured distance from the controller (3).

## Description

The present invention relates to a method of automatically addressing a plurality of I/O-Modules being connected to a controller serially by a serial bus. Furthermore, the present invention relates to an I/O-Module for a Building Automation System. Additionally, the present invention relates to a network and a Building Automation System including such I/O-Modules.

*Independent of the grammatical term usage, individuals with male, female or other gender identities are included within the term.*

I/O-Modules (input/output modules or I/O module devices) are devices interfacing with the physical world and used to integrate peripheral devices such as sensors and actuators into a Building Automation System. Multiple I/O-Modules can be connected to one Building Automation Controller via an I/O-Bus.

With the currently used conventional bus communication technology all I/O-Modules were connected side by side to the same physical wires (multi-drop). Bus-wires between the connectors on both sides of the I/O-Module were as short as possible (typically the width of the I/O-Module) with the goal to reduce the total bus cable length and to increase the robustness of the physical layer of the conventional bus.

Each I/O Module needs an unambiguous I/O-Module-Address which is used by the Building Automation Controller to address the I/O-Module via the I/O-Bus.

So far, the I/O-Module-Address was configured by the installer via a pluggable electromechanical address key. This addressing method is costly since an electromechanical address decoder was required per I/O-Module, and the installer had to bring along the right set of pluggable address keys. Spare address keys from the set are thrown away (waste).

Alternatively, the I/O-Module-Address can be configured via a commissioning tool, e.g., Mobile Phone and Mobile App. This procedure would require a connection such as Bluetooth, NFC, or USB between the I/O-Module and the commissioning tool. This solution requires extra hardware and makes the I/O-Module more expensive. Other solutions require e.g. pre-engineered serial number information, e.g. printed on the I/O-Module (e.g. QR-Code), or an automatical generation of an I/O-Module-Address and storing it in the terminal base of the I/O-Module.

The object of the present invention is to make adressing of I/O-Modules more convenient.

This object is solved by a method, an I/O-Module, a network and a Building Automation System according to the independent claims. Further developments of the invention are defined in the subclaims.

In one aspect of the present invention there is provided a method of automatically adressing a plurality of I/O-Modules being connected to a controller serially by a serial bus. The I/O-Modules are input/output modules with which a network can be established. For example, sensors and actuators can be connected to the controller via I/O-Modules. The I/O-Modules are connected one behind the other via the serial bus to the controller. The controller and the plurality of I/O-Modules may be housed in a controll cabinet of a Building Automation System. Specifically, the Building Automation System may comprise a Building Automation Controller for controlling the plurality of I/O-Modules.

The inventive method may include the step of automatically measuring a respective distance from the controller to each of the I/O-Modules via the serial bus. Since the I/O-Modules are connected in series to the controller, each I/O-Module has an individual distance to the controller. The measurement is performed automatically, so that the respective distances of the I/O-Modules can be provided in short time. Specifically, there may be provided a list of the I/O-Modules together with the individual distances to the controller. The advantage is that the series of the I/O-Modules does not have to be created manually.

The automatically measuring is performed with a pregiven distance resolution. Each measurement technique has a respective measuring resolution. As here a distance is measured, a respective distance resolution results. The distance resolution represents the smallest resolvable distance.

A conductor length within each I/O-Module between respective two external ports of the serial bus is longer than the shortest distance between the two external ports and longer than the pregiven distance resolution. Each I/O-Module has two external ports for the serial bus. Preferably, the two external ports are provided on oposit sides of the module. Thus, adjacent modules may be arranged very closely. When the serial bus is routed through the modules. However, the routing lengt within each I/O-Module is not as short as possible. The lengt of the serial bus within the housing of each I/O-Module is rather longer than the shortest distance between its external ports of the serial bus. This means that the conductor for the serial bus follows an indirect route between the two ports. Thus, the conductor represents a detour between the two ports. For instance, such detour may be an arch. The further criterion for the length of the conductor is, that it must be longer than the pregiven distance resolution. This means that the artificial extension of the electrical conductor shall guarantee that the automatic measurement of the distances of the several I/O-Modules shall be unambigeuos with a high degree of propability.

In a further step of the inventive method all I/O-Modules are automatically adressed in depence of the respective measured distance from the controller. This means that the individual distances of the I/O-Modules are assigned to respective positions or adresses. Thus, the adresses of the I/O-Modules represent the individual distances of all I/O-Modules from the controller. For instance, the adress number of the I/O-Modules is increased with its distance from the controller.

Thus, even if the width of the I/O modules is equal to or smaller than the distance resolution of the measurement technique for measuring the respective distance from the controller to each of the I/O-Modules via the serial bus, there may be provided an automatic method for addressing and commissioning of I/O-Modules of devices or I/O-Module-devices of a Building Automation System, wherein the I/O-Modules of devices or I/O-Module-devices being connected by a Single Pair Ethernet datalink. The method may comprise the following steps:
- discovering I/O-Modules on the I/O-Bus via node discovery and registration procedure by a Building Automation Controller of the Building Automation System;
- initiating a position measurement with each discovered I/O-Module on the same I/O-Bus line by the Building Automation Controller;
- assigning consecutive I/O-Module-Addresses to the respective I/O-Modules by the Building Automation Controller according to the measured position of the respective I/O-Module.

The advantage of the inventive method is that the artificial extention of the electrical conductor within the I/O-Modules allows the automatically adressing of these I/O-Modules connected serially to the controller. Thus, customizing of a building automation system can be simplified.

According to one embodiment the measuring of the respective distance includes a measurement of a response time to a signal. In other words, the distance is measured by outputting a signal from the controller to the I/O-Modules and each I/O-Module answers with a respective response signal. The distance of each I/O-Module may measured serially (compare 10BASE-T1S Standard). The response time represents the time period between the transmission of the signal and the reception of the response signal. The signal speed is constant and, therefore, the response time is a direct indicator of the travelled distance. Advantageously, the response time can be measured with standard elements.

According to another aspect of the present invention there is provided an I/O-Module for a Building Automation System, the I/O-Module includes
- a housing,
- two ports for a serial bus provided at outer walls of the housing and
- an electrical conductor within the housing between the two ports,
- wherein a conductor length of the electrical conductor between the two ports of the serial bus is longer than the shortest distance between the two ports.

The I/O-Module comprises a housing which is typically designed for the installation in controll cabinets. The outer walls of the housing (preferably two outer walls arranged opposite to each other) each have one port for the serial bus. Furthermore, there is provided an electrical conductor between the two ports within the housing of the I/O-Module. In other words, the serial bus is looped through the module with the electrical conductor.

The conductor length of the electrical conductor within the I/O-Module is not as short as possible. The shortest distance between the two ports would correspond to the length of a straight line between the ports. The artifically extended electrical conductors (inside or outside of the I/O-Module) allow to use measurement techniques having a distance resolution which usually is not capable of providing unambigeuos distance values for I/O-Modules connected in series, if these I/O-Modules are arranged close to each other.

According to an embodiment of the I/O-Module the conductor length is longer than a width of the housing of the I/O-Module between the two ports. Typically, the I/O-Modules have a certain uniform width. Then, the electrical conductor between the two ports of the serial bus is longer than this uniformed length.

In another embodiment the conductor length is at least 8 or 10 cm within the housing. For example, typical I/O-Modules have a width of 5 cm. In this case the length of the electrical conductor within the housing of the I/O-Module is certainly longer than the module width.

According to a preferred embodiment the conductor length is at least twice as long as the width of the housing of the I/O-Module between the two ports or at least twice as long as a distance resolution of a pregiven distance measurement technique. This means, that the conductor length is related to the width of the I/O-Modules or the pregiven distance measurement technique. For example, it is known that a specific measurement technique has a distance resolution of 5 cm. In this case the conductor length within the I/O-Module housing must be 10 cm or more. Alternatively, if the width of the housing of the I/O-Module is 5 cm, the conductor length for the serial bus within the I/O-Module must be 10 cm or more. The advantage of this condition is that the position of the I/O-Modules with respect to the controller can be determined unambigeously, since the sampling theorem of Nyquist-Shannon is fullfilled.

According to further embodiment the electrical conductor has at least partly the form of a meander or a loop. The meander shape makes it possible to use as little space as possible for the electrical conductor.

Furthermore, according to the present invention there may be provided a network including a plurality of I/O-Modules as described above and a controller designed to perform the above mentioned method. The network may include sensors and/or actuators connected to the I/O-Modules. Furthermore, the network may also include several controllers where are respective serial bus with I/O-Modules is connected to each controller. Each controller may perform the above mentioned method.

According to a further embodiment the network is designed as Multidrop Network. The Multidrop Network can be realized as Single Pair Ethernet (SPE). The Multidrop Network can be specified according to IEEE Standard 10BASE-T1S. 10BASE-T1S Single Pair Ethernet (SPE) PHY Devices and MAC-PHY Devices can communicate via the Multidrop Network or via a Multidrop I/O-Bus.

10BASE-T1S is a fully standardized Ethernet PHY (Physical-Layer-Transceiver respectively physical transmission layer for sending and receiving protocols based on the OSI model), that can connect a 802.3 Clause 4-compliant MAC to a single balanced pair of conductors at the speed of 10 Mbit/s (at MAC/PLS).

"PHY" is an abbreviation for "physical layer", it is an electronic circuit, usually implemented as an integrated circuit, required to implement physical layer functions of the OSI model in a network interface controller.

A PHY connects a link layer device (also known as "MAC" as an acronym for medium access control) to a physical medium such as an optical fiber or copper cable.

The Single Pair Ethernet (SPE) datalink can be a daisy-chain network or a daisy-chain I/O-Bus. The daisy-chain network or a daisy-chain I/O-Bus can be specified accord-ing to IEEE Standard 10BASE-T1L.

10BASE-T1S and 10BASE-T1L are standardized in IEEE Std 802.3cg-2019, they are variants of 10 megabit per second Ethernet over single twisted pair. 10BASE-T1S (multidrop network) originated in the automotive industry and is especially useful short-distance applications where substantial electrical noise can occur. 10BASE-T1L (point to point network) is useful especially for long-distance Ethernet, supporting connections up to 1 km in length. 10BASE-T1S and 10BASE-T1L are useful to implement applications in Internet of things environments.

According to a further aspect of the present invention there may be provided a controll cabinet housing for a plurality of I/O-Modules as mentioned above and a controller designed to perform one of the above methods, wherein the I/O-Modules are serially connected to the controller via the serial bus. Usually an automation system includes a controll cabinet which houses plural I/O-Modules that enable the communication to the controller. Specifically, the I/O-Modules are arranged on the serial bus in the housing of the controll cabinet. The customization of such line of I/O-Modules is simplified by the inventive method.

Furthermore, according to the present invention there may be provided a Building Automation System comprising at least one network described above. Thus, the advantages of the above described method and/or network can also be used for Building Automation Systems.

In a specific embodiment there may be provided an arrangement for addressing and commissioning of I/O-Modules of devices or I/O-Module-devices of a Building Automation System, wherein the I/O-Modules of devices or I/O-Module-devices being connected by a Single Pair Ethernet datalink,
wherein a Building Automation Controller is configured to discover I/O-Modules on the I/O-Bus via node discovery and registration procedures;
wherein the Building Automation Controller is configured to initiate a position measurement with each discovered I/O-Module on the same I/O-Bus line;
wherein the Building Automation Controller is configured to assign consecutive I/O-Module-Addresses to the respective I/O-Modules according to the measured position of the respective I/O-Module or according to the respective measured distance of the respective I/O-Module to the Controller.

The advantages and further developments of the above described method also apply to the above mentioned I/O-Module, network, controll cabinet and Building Automation System. Respective method features can be regarded as functional features of the devices.

The present invention will now be described in further detail along with the attached drawings showing in:
- FIG 1: a bus wiring of I/O-Modules with optimized shortest cabling distance;
- FIG 2: a bus wiring of I/O-Modules with additional cable length inside the I/O-Module according to one embodiment of the present invention;
- FIG 3: a schematic flow chart of an embodiment of a method according to the present invention.

The following examples represent preferred embodiments of the present invention.

A physical I/O-Module shall be assigned to an engineered representation of the I/O-Module in one Building Automation Controller based on I/O-Bus topology discovery and Module position measurement methods in combination with an engineered logical I/O-Module-Address 1..N which represents the Position (sequence) of the Module on the I/O-Bus. A preferred embodiment is based on the 10BASE-T1S multidrop topology discovery technology.

The above mention general method of automatically assigning addresses to I/O-Modules includes the steps of:
- discovering I/O-Modules on the I/O-Bus via node discovery and registration procedure by a Building Automation Controller of the Building Automation System;
- initiating a position measurement (topology discovery) with each discovered I/O-Module on the same I/O-Bus line by the Building Automation Controller; and
- assigning (consecutive) I/O-Module-Addresses to the respective I/O-Modules by the Building Automation Controller according to the measured position of the respective I/O-Module.

However, this method will only work if the accuracy of the topology discovery measurement is sufficient. With current 10BASE-T1S transceiver technology the accuracy of position measurement is expected to be in the range of few centimeters.

Advantageously to determine the sequence of the I/O-Modules on an I/O-Bus, the accuracy of the position measurement or the distance measurement shall be < ½ of the cable length between two I/O-Modules, i.e. conventionally ½ the width of the smallest I/O-Module, if the I/O-Modules are installed side by side e.g. on a DIN Rail. This ensures the quality of the position measurement or the distance measurement thereby applying findings of the Nyquist-Shannon sampling theorem.

I/O-Modules of Building Automation System have typically a width of 5 to 10 cm. Therefore the accuracy of the position or distance measurement must be in the range of 2.5 cm or better to fullfill above requirements. Therefore, with the current 10BASE-T1S transceiver technology the module order and thus topology can not be discovered with certainty. The accuracy is insufficient, violating the Nyquist-Shannon sampling theorem.

SPE datalinks for a multidrop network, such as 10BASE-T1S, provide features like topology discovery and node Position detection within the scope of the physical 10BASE-T1S line connectivity. This feature can be used to automatically determine the position of an I/O-Module on the physical 10BASE-T1S line and on the corresponding logical I/O-Bus segment.

As described above the accuracy of the topology discovery, i.e. of the position or distance measurement, should be more precise than ½ of the cable length between the communication interfaces (MAC/PHY) of two I/O-Modules, if the I/O-Modules are mounted side to side. This is not the case with current dimensions of I/O-Modules and 10BASE-T1S transceiver technology.

The 10BASE-T1S topology discovery feature measures the time delay to transmit a pulse between two nodes on the electrical 10BASE-T1S wire. This physical connection between two nodes can be designed as desired, as long as electrical characteristics such as cable capacity, inductance and resistance are within the allowed range.

Normally a short wire connection between two nodes is better than a long one. Therefore, in conventional I/O-Modules there was a straight wiring between the connectors on both sides of the I/O-Module, and therefore the cable distance was approximately the width of the I/O-Module.

With the present invention, if the wiring between the I/O-Bus connectors on both sides of the I/O-Module is intentionally designed longer than geometrically necessary (no straight cabling inside the I/O-Module), e.g. by routing of the two I/O-Bus wires on the PCB, or implementing a small cable loop or other measures to increase the resulting minimum cable distance between two I/O-Bus nodes by e.g. 5 cm in addition to the width of the I/O-Module, the accuracy of the topology discovery measurement can be enhanced.

With an I/O-Module width of at least 5 cm and the prolonged bus wire inside the I/O-Module, the cable distance between two nodes will be at least 10 cm and therefore the accuracy of the 10BASE-T1S position measurement will be sufficient for unambigeously determining the relative position of the I/O-Modules on the I/O-Bus.

With the allowed number of at least 8 (e.g. 32) nodes per 10BASE-T1S multidrop line, the resulting total I/O-Bus cable length will be increased by e.g. 32x 5cm, i.e. 160cm, which is neglectable regarding the required 10BASE-T1S cabling characteristics, in the context of an I/O-Bus for I/O-Modules in a cabinet.

The prolonged I/O-Bus wire inside the I/O-Module is known at design time of the product, as well as the width of the I/O-Module. Both information can be used together with the measured distance and the derived I/O-Module position to calculate the absolute distance of the I/O-Module from the controller on the bus or DIN Rail, e.g. to be visualized for diagnostic purposes on a service tool. Both information can be used to determine and compensate the error of the distance measurement.

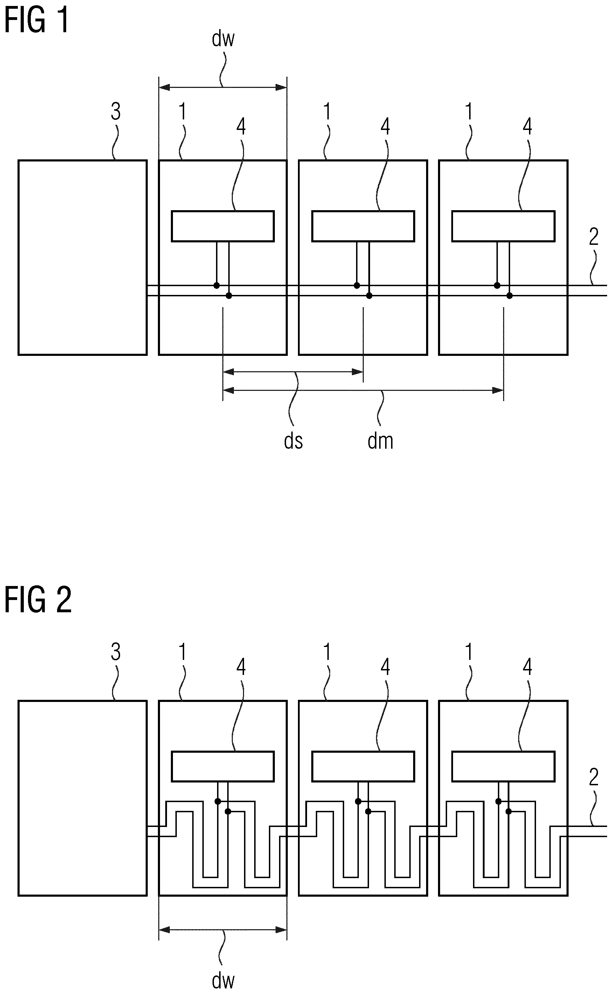

FIG 1 shows an embodiment of a conventional bus wiring for a cabinet of a building automation system. The I/O-Modules 1 may be of any kind of bus connector modules, e.g. IP based I/O-Modules. The I/O-Modules 1 are connected to a bus controller 3 via an I/O-Bus 2. The bus wiring can be realized as 10BASE-T1S bus wiring of the I/O-Modules 1. Each I/O-Module 1 includes an interface 4 for contacting the I/O-Bus 2.

The I/O-Modules 1 can be arranged with optimized shortest cabling distance ds. Usual position and distance measurement will not work for small I/O-Module sizes.

The shortest cabling distance ds corresponds to the shortest wire length between two neighbouring I/O-Modules 1 arranged side by side. This shortest cabling distance ds roughly corresponds to the module width dw in the case of identical I/O-Modules 1 arranged side by side.

In the example of FIG 1 the accuracy distance dm of the automatic position or distance measurement may be twice the module width dw. In this case the usual position and distance measurement will not work.

FIG 2 shows an embodiment of a bus wiring according to the present invention for a cabinet of a Building Automation System. The arrangement of the I/O-Modules 1 and the controller 3 is equal to that of FIG 1. However, the wire length for the I/O-Bus 2 within each I/O-Module 1 is prolonged. This means, that the cable length within the housing of each I/O-Module 1 is longer than the respective module width dw. Specifically, the wire may be shaped like a meander within one I/O-Module 1 as shown in FIG 2.

However, the prolongation may also be obtained by other shapes of the wire that deviate from a straight line. Moreover, the interface 4 does not need to be placed in the middle of the bus wire as shown in FIG 2. The Interface 4 may rather be located at any position of the bus wire.

Even if the I/O-Bus 2 is shown with two wires, the invention can also work with other types of busses having another number of wires. Furthermore, the embodiments of the automatic adressing of the plural I/O-Modules is not limited to the 10BASE-T1S technology.

Preferably, the wire length within I/O-Module 1 is longer than twice the distance resolution of the applied distance measurement technique. With this prerequisite the position of each I/O-Module can be unambigeously determined by the controller 3 on the I/O-Bus 2. At the very least, the length of the cable or wire within each I/O-Module 1 should be greater than the distance resolution of the measurement technique (here also called accuracy distance dm). Thus, installers can benefit from the advantages of the automatic adressing and commissioning of I/O-Modules.

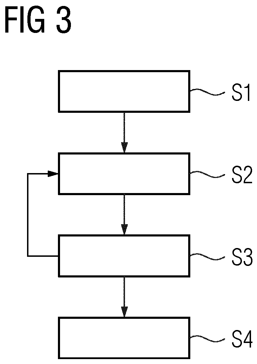

FIG 3 shows an embodiment of a customization of I/O-Modules 1 in a controll cabinet of a Building Automation System. In step S1 the customization is started.

In a subsequent step S2 an automatic distance measurement is performend for one I/O-Module on an I/O-Bus. The distance measurement may be performed by a bus controller to which the I/O-Modules are arranged in series. Each distance is assigned to a respective position of the I/O-Module on the I/O-Bus. For instance, the positions of the I/O-Modules on the I/O-Bus are represented by ascending numbers beginning at the I/O-Module being directly connected to the bus controller.

In a further step S3 the distance or position of the respective I/O-Module is assigned to a logical adress. Specifically, the distance may directly be assigned to an adress. Alternatively, the distance is first assigned to a position and afterwards the position is assigned to an adress.

The steps S2 and S3 are repeated for each I/O-Module. Finally, each I/O-Module on the I/O-Bus has its individual adress. If so, the customization process can be stopped in step S4 at least with respect to the adressing of the I/O-Modules.

The above embodiments show that advantageously the I/O-Module adress is simply given by the discovered module position on e.g. the 10BASE-T1S line and the derrived logical module note adress within the I/O-Bus segment which is also known at engineering time.

The inventive concept of artificially extending the conductor length of the I/O-Bus inside or outside an I/O-Module can specifically be used for small I/O-Modules which are amounted side by side on a DIN Rail.

### Bezugszeichenliste / List of Reference

- 1: I/O-Module
- 2: I/O-Bus
- 3: controller
- 4: interface

- dm: accuracy distance of measurement
- ds: shortest cabling distance
- dw: module width

## Claims

1. Method of automatically addressing a plurality of I/O-Modules (1) being connected to a controller (3) serially by a serial bus (2), the method includes the steps of:
- automatically measuring (S2) a respective distance from the controller (3) to each of the I/O-Modules (1) via the serial bus (2),
- wherein the automatically measuring (S2) is performed with a pregiven distance resolution (dm),
- wherein a conductor length within each I/O-Module (1) between respective two external ports of the serial bus (2) is longer than the shortest distance between the two external ports and longer than the pregiven distance resolution (dm), and
- automatically addressing (S3) all I/O-Modules (1) in dependence of the respective measured distance from the controller (3).

2. Method according to claim 1, wherein the measuring (S2) of the respective distance includes a measurement of a response time to a signal.

3. I/O-Module (1) for a Building Automation System, the I/O-Module (1) includes
- a housing,
- two ports for a serial bus (2) provided at outer walls of the housing and
- an electrical conductor within the housing between the two ports,
- wherein a conductor length of the electrical conductor between the two ports of the serial bus (2) is longer than the shortest distance between the two ports.

4. I/O-Module according to claim 3, wherein the conductor length is longer than a width (dw) of the housing of the I/O-Module (1) between the two ports.

5. I/O-Module according to claim 3 or 4, wherein the conductor length is at least 8 or 10 cm within the housing.

6. I/O-Module according to one of the claims 3 to 5, wherein the conductor length is at least twice as long as the width (dw) of the housing of the I/O-Module (1) between the two ports or at least twice as long as a distance resolution (dm) of a pregiven distance measurement technique.

7. I/O-Module according to one of the claims 3 to 6, wherein the electrical conductor has at least partly the form of a meander or a loop.

8. Network including a plurality of I/O-Modules according to one of the claims 3 to 7 and a controller (3) designed to perform the method of claim 1 or 2.

9. Network according to claim 8 being designed as Multidrop network.

10. Network according to claim 8 or 9 having a 10BASE-T1S topology.

11. Network according to one of the claims 8 to 10, including a Single Pair Ethernet datalink, wherein the electrical conductor is part of the Single Pair Ethernet datalink.

12. Control cabinet housing a plurality of I/O-Modules (1) according to one of the claims 3 to 7 and a controller (3) designed to perform the method of claim 1 or 2, wherein the I/O-Modules (1) are serially connected to the controller (3) via the serial bus (2).

13. Building Automation System comprising at least one network according to one of the claims 8 to 11.
